(19) Europäisches Patentamt
European Patent Office
Office européen des brevets

(11) **EP 3 730 292 B1**

(12) **EUROPEAN PATENT SPECIFICATION**

(45) Date of publication and mention
of the grant of the patent:
**19.04.2023 Bulletin 2023/16**

(21) Application number: **19826729.6**

(22) Date of filing: **27.06.2019**

(51) International Patent Classification (IPC):
**B32B 27/20** *(2006.01)*   **B32B 27/30** *(2006.01)*
**B32B 27/08** *(2006.01)*   **G02B 5/20** *(2006.01)*
**G02B 1/14** *(2015.01)*   **C08J 7/04** *(2020.01)*
**C09D 5/16** *(2006.01)*

(52) Cooperative Patent Classification (CPC):
(C-Sets available)
**C08J 7/0427; C08J 7/046; C08K 3/22; C09D 7/61;
C09D 7/67; C09D 133/02; G02B 1/14;**
C08J 2367/03; C08J 2379/08; C08J 2433/02;
C08K 3/08; C08K 3/36                      (Cont.)

(86) International application number:
**PCT/KR2019/007811**

(87) International publication number:
**WO 2020/004973 (02.01.2020 Gazette 2020/01)**

(54) **OPTICAL LAMINATE AND DISPLAY DEVICE**

OPTISCHES LAMINAT UND ANZEIGEVORRICHTUNG

STRATIFIÉ OPTIQUE ET DISPOSITIF D'AFFICHAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2018 KR 20180075902
27.07.2018 KR 20180088199
26.06.2019 KR 20190076434**

(43) Date of publication of application:
**28.10.2020 Bulletin 2020/44**

(73) Proprietor: **LG CHEM, LTD.
Yeongdeungpo-gu,
Seoul 07336 (KR)**

(72) Inventors:
• **LEE, Jinkuk
Daejeon 34122 (KR)**
• **KIM, Changjong
Daejeon 34122 (KR)**
• **JUNG, Soonhwa
Daejeon 34122 (KR)**
• **CHANG, Yeongrae
Daejeon 34122 (KR)**
• **PARK, Jin Young
Daejeon 34122 (KR)**
• **KIM, Hye Min
Daejeon 34122 (KR)**

(74) Representative: **Goddar, Heinz J.
Boehmert & Boehmert
Anwaltspartnerschaft mbB
Pettenkoferstrasse 22
80336 München (DE)**

(56) References cited:
EP-A1- 2 843 008        EP-A1- 3 248 776
EP-A1- 3 309 228        EP-A1- 3 309 229
EP-A1- 3 309 230        JP-A- 2008 046 496
JP-A- 2010 102 123      JP-A- 2012 066 477
KR-A- 20110 013 547     KR-A- 20170 052 479
US-A1- 2010 143 674     US-A1- 2013 273 354

(52) Cooperative Patent Classification (CPC): (Cont.)

C-Sets
**C08K 3/22, C08L 33/02;
C09D 133/02, C08K 3/22**

**Description**

## BACKGROUND OF THE INVENTION

The present invention relates to an optical laminate and a display device.

## BACKGROUND OF THE INVENTION

Recently, with the development of mobile devices such as smartphones and tablet PC, thinning and slimming of substrates for display are required. Glass or tempered glass is commonly used as a material having excellent mechanical properties on windows or front boards for displays of mobile devices. However, the glass causes the weight increase of the mobile devices due to its own weight, and has a problem of breakage due to an external impact.

Accordingly, the research for plastic resin is actively underway as a material which can replace the glass. A plastic resin film is lightweight and less fragile, and thus is suitable for the trend of pursuing lighter mobile devices. In particular, in order to implement a film having high hardness and abrasion resistance properties, films for coating a hard coating layer made of plastic resins onto a support substrate have been proposed.

As a method of increasing the surface hardness of the hard coating layer, a method of increasing the thickness of the hard coating layer may be considered. In order to ensure the surface hardness enough to replace the glass, it is necessary to implement a certain thickness of a hard coating layer. However, as the thickness of the hard coating layer is increased, the surface hardness may be increased but the occurrence of wrinkles and curls are increased due to curing shrinkage of the hard coating layer, and at the same time cracking and peeling of the coating layer are likely to occur. Therefore, the practical application of this method is not easy.

Meanwhile, a display in which a part of the display device is bent or flexibly warped for aesthetic and functional reasons has recently been attracting attention, and this tendency is noticeable particularly in mobile devices such as smartphones and tablet PCs. However, since glass is not suitable for use as a cover plate for protecting such a flexible display, it needs to be replaced with a plastic resin or the like. However, for that purpose, it is not easy to produce a thin film having sufficient flexibility while exhibiting a glass level of high hardness.

## BRIEF SUMMARY OF THE INVENTION

The present invention provides an optical laminate which exhibits high hardness while simultaneously satisfying the physical property balance between flexibility and high hardness, in particular, hardly has a risk of damaging the film even in repetitive bending or folding operations, and thus, can be easily applied to bendable, flexible, rollable or foldable mobile devices, display devices, and the like.

The present invention provides a display device including the above-mentioned optical laminate.

In one aspect, there is provided an optical laminate including: a substrate; and a hard coating layer formed on at least one surface of the substrate and containing a binder resin and two or more groups of inorganic particles having different average radii, wherein a domain formed by surrounding two or more first inorganic particles having an average radius of 10 to 15 nm by two or more second inorganic particles having an average radius of 20 to 35 nm is formed in the hard coating layer.

In another aspect, there is provided a display device including the above-mentioned optical laminate.

## DETAILED DESCRIPTION OF THE INVENTION

Hereinafter, an optical laminate and a display device according to specific exemplary embodiments of the present invention will be described in more detail.

In the present invention, "flexible" means a state having flexibility to such an extent that cracks of 3 mm or more in length do not occur when wound on a cylindrical mandrel with a diameter of 4 mm. Therefore, the flexible plastic film of the present invention can be applied to a cover film of a bendable, flexible, rollable, or foldable display or the like.

In accordance with one exemplary embodiment of the invention, there can be provided an optical laminate including: a substrate; and a hard coating layer formed on at least one surface of the substrate and containing a binder resin and two or more groups of inorganic particles having different average radii, wherein a domain formed by surrounding two or more first inorganic particles having an average radius of 10 to 15 nm by two or more second inorganic particles having an average radius of 20 to 35 nm is formed in the hard coating layer.

The present inventors have conducted research on an optical laminate, a cover window, or an element substrate applicable to a display device having a thinner thickness, and have found through experiments that in the case where a domain formed by surrounding two or more first inorganic particles having an average radius of 10 to 15 nm by two or more second inorganic particles having an average radius of 20 to 35 nm is formed in the hard coating layer formed on a predetermined substrate, it exhibits high hardness while simultaneously satisfying the physical property balance between flexibility and high hardness, in particular, hardly has a risk of damaging the film even in repetitive bending or folding operations, and thus, can be easily applied to bendable, flexible, rollable or foldable mobile devices, display devices, and the like. The present invention has been completed on the basis of such findings.

Since the optical laminate may have physical properties that can replace tempered glass and the like, the optical laminate may have characteristics to a degree at which it may not be broken by pressure or force applied from the outside and also can be sufficiently warped and folded.

The physical properties such as bending durability and surface hardness of the optical laminate may be realized by optimizing the hard coating layer formed on the substrate. More specifically, the characteristics of the optical laminate may be due to the formation of the above-described domain.

The above-described domain formed on the hard coating layer has a high density packing structure in which the first inorganic particles having a relatively small average radius are surrounded by and located inside the second inorganic particles having a relatively large average radius. Thereby, compared to the case where only a single particle is distributed, it is possible to have a feature that deformation and damage due to external force are relatively small. For this reason, the hard coating layer may have a higher surface hardness, and additionally, the optical laminate of the exemplary embodiment including the hard coating layer can simultaneously satisfy the physical property balance between flexibility and high hardness properties, and can prevent damage occurring to the internal structure even by repetitive bending or folding operations.

The "domain formed by surrounding two or more first inorganic particles having an average radius of 10 to 15 nm by two or more second inorganic particles having an average radius of 20 to 35 nm" may be formed by adjusting the mixing process of the binder resin and two or more groups of inorganic particles having different average radii or adjusting the content of the components in the process of forming the hard coating layer, in particular by adjusting the drying rate of the process of forming the hard coating layer, etc.

Thereby, the thickness of the hard coating layer is not particularly limited, but in order to make the "domain formed by surrounding two or more first inorganic particles having an average radius of 10 to 15 nm by two or more second inorganic particles having an average radius of 20 to 35 nm" form more smoothly, it is preferable that the hard coating layer is coated so as to have a thickness of a predetermined level or more and then dried.

For example, the hard coating layer may have a thickness of 25 $\mu$m or more, or 30 $\mu$m to 100 $\mu$m. As the hard coating layer has such thickness, the domain formed by surrounding two or more first inorganic particles having an average radius of 10 to 15 nm by two or more second inorganic particles having an average radius of 20 to 35 nm may be formed in the hard coating layer.

Whether the "domain formed by surrounding two or more first inorganic particles having an average radius of 10 to 15 nm by two or more second inorganic particles having an average radius of 20 to 35 nm" is formed can be confirmed using a device such as a scanning electron microscope (SEM). By measuring the distance between two or more second inorganic particles having an average radius of 20 to 35nm through small-angle X-ray scattering analysis, it can be indirectly confirmed whether the domain is formed.

The inorganic particles contained in the hard coating layer include first inorganic particles having an average radius of 10 to 15 nm and second inorganic particles having an average radius of 20 to 35 nm, and the domain formed by surrounding two or more first inorganic particles having an average radius of 10 to 15 nm by two or more second inorganic particles having an average radius of 20 to 35 nm is formed in the hard coating layer, the distance (Rd) between the centers of two second inorganic particles located opposite to the first inorganic particles located at the center in the domain is 60 nm to 100 nm.

The distance Rd between the centers of two second inorganic particles in the domain of the inorganic particles may be measured and calculated through small-angle X-ray scattering analysis of a synchrotron radiation accelerator. For example, the data analysis (result fitting) can be performed by using the u-SAXS beam-line 9A from the Pohang Accelerator Laboratory(Pohang Light Source), merging the measured data set by a NIST SANS data reduction package, and using the model function included in a NIST SANS package.

As described above, the hard coating layer or the like includes two or more groups of inorganic particles having different average radii from that of the binder resin, wherein the two or more groups of inorganic particles may include first inorganic particles having an average radius of 10 to 15 nm and second inorganic particles having an average radius of 20 to 35 nm.

As the inorganic particles contained in the hard coating layer include first inorganic particles having an average radius of 10 to 15 nm and second inorganic particles having an average radius of 20 to 35 nm, the above-described domain can be more easily formed in the hard coating layer.

More specifically, the average radius ratio of the first inorganic particles having an average radius of 10 to 15nm: the second inorganic particles having an average radius of 20 to 35nm may be 1: 1.2 or more, or 1: 1.5 or more, or 1: 2 or more. It may also be 1:20 or less. When the average radius ratio of the second inorganic particles to the first inorganic particles is too small, the size of the two groups of particles are similar and thus, the domain having a high-density particle packing may not be formed. When the average radius ratio of the second inorganic particles to the first inorganic particles is too large, the size of the above-described domain is increased and thus, the haze of the hard coating layer may be greatly increased.

The average radius of each of the first inorganic particles and the second inorganic particles can be confirmed through a commonly known method. For example, it may be calculated and derived by measuring the radius of individual particles identified in the electron micrographs (SEM, TEM, etc.) of the hard coating layer, or it may be the average radius of the inorganic particles calculated through X-ray scattering experiments.

On the other hand, the first inorganic particles may have an average radius of 10 to 15nm. At this time, the radius of the individual inorganic particles capable of forming a domain among the individual inorganic particles contained in the first inorganic particles is in the range of ± 5nm of the average radius. For example, the radius of the individual inorganic particles contained in the first inorganic particle and forming the domain may be included in the range of 5 to 20 nm.

In addition, the second inorganic particles may have an average radius of 20 to 35nm. At this time, the radius of the individual inorganic particles capable of forming a domain among the individual inorganic particles contained in the second inorganic particles is in the range of ± 5nm of the average radius. For example, the radius of the individual inorganic particles contained in the second inorganic particles and forming the domain may be included in the range of 15 to 40 nm.

The two or more groups of inorganic particles having different average radii may be, for example, metal atoms such as silica, aluminum, titanium, or zinc, or oxides or nitrides thereof, and the like, and each may be independently silica fine particles, aluminum oxide particles, titanium oxide particles, or zinc oxide particles or the like.

On the other hand, as described above, the hard coating layer may exhibit a pencil hardness of 5H or more, or 6H or more, or 7H or more under a load of 750g.

As described above, generally, the film or optical laminate having a thin thickness can secure flexibility, but it cannot easily secure durability against repeated bending or folding operations while securing high surface strength.

In contrast, the hard coating layer included in the optical laminate of the exemplary embodiment may have the surface hardness as described above, and additionally, it may have the feature that a crack does not occur when placing the optical laminate at an interval of 5 mm in the middle of the optical laminate and repeating 100,000 times the processes of folding and spreading both sides of the optical laminate at 90 degrees toward the bottom surface at room temperature.

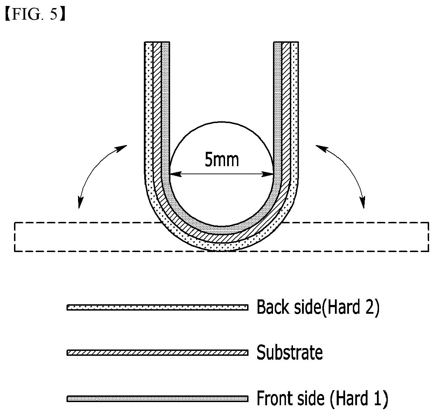

FIG. 5 is a diagram schematically illustrating a method for measuring bending durability properties of a flexible plastic film according to an exemplary embodiment of the present invention.

Referring to FIG. 5, the film is placed so as to be horizontal with the bottom, and set so that the interval between the portions folded at a middle portion of the film is 5 mm. Then, processes of folding and spreading both sides of the films at 90 degrees toward the bottom surface are repeated 100,000 times at room temperature at a speed of about 1 to about 3 times/second, thereby measuring the durability against bending.

At this time, in order to maintain the distance between the folding portions constant, for example, the film is placed so as to be in contact with a rod having a diameter (R) of 5 mm, the remaining portion of the film is fixed, and the processes of folding and spreading both sides of the film around the rod can be performed. Further, the folded portion is not particularly limited as long as it is the inside of the film, and for convenience of measurement, the central portion of the film may be folded so that the remaining both sides of the film excluding the folded portion are symmetrical.

In measuring such durability, the optical laminate of the exemplary embodiment does not generate cracks of 1 cm or more, or 3 mm or more even after bending 100,000 times, and does not substantially generate cracks.

On the other hand, the content of two or more different groups of inorganic particles within the range in which the domain is formed in the hard coating layer is not particularly limited, but preferably, the hard coating layer may include 20 to 80 parts by weight of the total amount of the first inorganic particles and the second inorganic particles based on 100 weight of the binder resin.

When the content of two or more different groups of inorganic particles included in the hard coating layer is too low, formation of the domain is made difficult or the hardness of the hard coating layer may be lowered. In addition, when the content of two or more different groups of inorganic particles included in the hard coating layer is too high, the hardness may be increased, but the flexibility of the optical laminate may be greatly reduced, or the durability against repeated bending or folding operations may also be reduced..

The hard coating layer may include a binder resin.

Specific examples of the binder resin are not limited, and for example, the binder resin may be a polymer or copolymer of monomer(s) having a photocurable reactive group, and specifically, it may be a polymer or copolymer formed from (meth)acrylate-based monomers or oligomers, vinyl-based monomers or oligomers, and the like.

For example, the binder resin may include a polymer or copolymer of a 3- to 6-functional (meth)acrylate-based monomer.

The 3- to 6-functional acrylate-based mononer or oligomer may include trimethylolpropane triacrylate (TMPTA), trimethylolpropaneethoxy triacrylate (TMPEOTA), glycerin propoxylated triacrylate (GPTA), pentaerythritol tetraacrylate (PETA), dipentaerythritol hexaacrylate (DPHA), and the like. The 3- to 6-functional acrylate-based monomer or oligomer may be used alone or in combination of different groups.

The (meth)acrylate-based monomer or oligomer, vinyl-based monomer or oligomer may have a weight average molecular weight (Mw) ranging from about 200 to about 2,000 g/mol, or from about 200 to about 1,000 g/mol, or about 200 to about 500 g/mol.

The 3- to 6-functional acrylate-based binder has an acrylate equivalent weight ranging from about 50 to about 300 g/mol, or from about 50 to about 200 g/mol, or from about 50 to about 150 g/mol.

When the weight average molecular weight and the acrylate equivalent weight of the 3- to 6-functional acrylate-based binder are respectively within the above-mentioned ranges, a coating layer having more optimized physical properties can be formed.

Meanwhile, as the substrate, various support substrates known to be applicable to an optical film or an optical element can be used without particular limitation.

For example, the substrate is an optical transparent plastic resin having an elastic modulus of about 4 GPa or more as measured according to ASTM D882 and a thickness in the range of 20 to 300 $\mu$m so that the optical laminate secures flexibility and hardness, and can be used without particularly limiting the method and material for producing the support substrate such as a stretched film or a non-stretched film.

Among the conditions of the substrate, the elastic modulus may be about 4 GPa or more, or about 5 GPa or more, or about 5.5 GPa or more, or about 6 GPa or more, and the upper limit value may be about 9 GPa or less, or about 8 GPa or less, or about 7 GPa or less. If the elastic modulus is less than 4 GPa, sufficient hardness cannot he achieved, and if the elastic modulus exceeds 9 Gpa which is too high, it may be difficult to form a film having flexibility.

Moreover, the thickness of the support substrate may be about 20 $\mu$m or more, or about 25 $\mu$m or more, or about 30 $\mu$m or more, and the upper limit value thereof may be about 300 $\mu$m or less, or about 200 $\mu$m or less, or about 150 $\mu$m or less, or about 100 $\mu$m or less. If the thickness of the substrate is less than 20 $\mu$m, there is a possibility that breakage or curling occurs in the process of forming the coating layer, and it may be difficult to achieve high hardness. On the other hand, if the thickness exceeds 300 $\mu$m, the flexibility deteriorates and formation of a flexible film may made difficult.

The substrate satisfies the above-described elastic modulus and thickness range, and for example, it may be a film including polyimide (PI), polyimideamide, polyetherimide (PEI), polyethyleneterephtalate (PET), polyethylenenaplithalate (PEN), polyetheretherketone (PEEK), cyclic olefin polymer (COP), polyacrylate (PAC), polymethylmethacrylate (PMMA), triacetylcellulose (TAC), and the like. The above support substrate may have a single layer or a multilayer structure including, if necessary, two or more substrates composed of the same as or different substances, and is not particularly limited.

On the other hand, in the optical laminate of the exemplary embodiment, the hard coating layer formed of a domain, which is formed by surrounding two or more first inorganic particles having an average radius of 10 to 15 nm by two or more second inorganic particles having an average radius of 20 to 35 nm, is formed on one surface of the substrate, and a second hard coating layer containing a binder resin including a polymer or copolymer of (meth)acrylate-based monomer may be formed on another surface of the substrate.

As the second hard coating layer is formed in addition to the hard coating layer described above, the physical property balance between flexibility and high hardness of the optical laminate may be further improved, and the durability against repeated bending or folding operations and the dent resistance may also be improved.

The thickness of each of the hard coating layer formed of a domain, which is formed by surrounding two or more first inorganic particles having an average radius of 10 to 15 nm by two or more second inorganic particles having an average radius of 20 to 35 nm, and the second hard coating layer is not particularly limited, but when the combined thickness of the hard coating layer and the second hard coating layer is excessively large, the flexibility of the optical laminate or the durability against repeated bending or folding operations may be reduced. Accordingly, it is preferable that each of the hard coating layer and the second hard coating layer has a thickness of 30 $\mu$m to 100 $\mu$m.

Meanwhile, the optical laminate can be provided by coating the coating composition including the above-described components onto at least one surface of the support substrate and then photo-curing it. The method of coating the coating composition is not particularly limited as long as it can be used in the technical field to which the present technology belongs, and for example, a bar coating method, a knife coating method, a roll coating method, a blade coating method, a die coating method, a micro gravure coating method, a comma coating method, a slot die coating method, a lip coating method, a solution casting method, or the like can be used.

The optical laminate may further include at least one selected from a layer, a membrane, a film or the like such as a plastic resin film, a cohesive film, a release film, a conductive film, a conductive layer, a liquid crystal layer, a coating layer, a cured resin layer, a non-conductive film, a metal mesh layer or a patterned metal layer on the top surface of the hard coating layer or between the substrate film and the coating layer.

For example, an antistatic layer having conductivity is first formed on a substrate, and then a coating layer is formed thereon to provide an anti-static function, or a low refractive index layer is introduced on the coating layer to implement a low reflection function.

Further, the layer, membrane, film or the like may be in any form of a single layer, a double layer, or a laminate type. The layer, membrane, film or the like may be formed by laminating a freestanding film with an adhesive, a cohesive film, or the like, or may be laminated on the coating layer by a method such as coating, vapor deposition, sputtering, or the like, but the present invention is not limited thereto.

Meanwhile, the hard coating layer may further include components commonly used in the art, such as a photoinitiator, an organic solvent, a surfactant, a UV absorber, a UV stabilizer, an anti-yellowing agent, a leveling agent, an antifouling agent, a dye for improving the color value, etc., in addition to the above-mentioned binder resin, inorganic fine particles and the like. Further, since the content thereof can be variously adjusted within the range that does not deteriorate the physical properties of the hard coating layer, it is not particularly limited. However, for example, they may be contained in an amount of about 0.01 to about 30 parts by weight based on about 100 parts by weight of the hard coating layer.

The surfactant may be a mono- or bi-functional fluorine-based acrylate, a fluorine-based surfactant, or a silicon-based surfactant. In this case, the surfactant may be included in a form of being dispersed or crosslinked in the crosslinked copolymer.

Further, the additive may include a UV absorber, or a UV stabilizer, and the UV absorber may include a benzophenone-based compound, a benzotriazole-based compound, a triazine-based compound or the like. The UV stabilizer may include tetramethyl piperidine or the like.

The photoinitiator may include 1-hydroxy-cyclohexyl-phenyl ketone, 2-hydroxy-2-methyl-1 -phenyl-propanone, 2-hydroxy-1-[4-(2-hydroxyethoxy)phenyl]-2-methyl-1-propanone, methylbenzoylformate, $\alpha,\alpha$-dimethoxy-$\alpha$-phenyl acetophenone, 2-benzoyl-2-(dimethylamino)-1-[4-(4-morpholinyl)phenyl]-1-butanone, 2-methyl-1-[4-(methylthio)phenyl]-2-(4-morpholinyl)-1-propanone diphenyl(2,4,6-trimethylbenzoyl)-phosphine oxide, or bis(2,4,6-trimethylbenzoyl)-phenylphosphine oxide, and the like, but are not limited thereto. In addition, commercially available products include Irgacure 184, Irgacure 500, Irgacure 651, Irgacure 369, Irgacure 907, Darocur 1173, Darocur MBF, Irgacure 819, Darocur TPO, Irgacure 907, Esacure KIP 100F, and the like. These photoinitiators can be used alone or in combination of two or more.

The organic solvent may include alcohol based solvents such as methanol, ethanol, isopropyl alcohol and butanol; alkoxy alcohol based solvents such as 2-methoxyethanol, 2-ethoxyethanol and 1-methoxy-2-propanol; ketone based solvents such as acetone, methyl ethyl ketone, methyl isobutyl ketone, methyl propyl ketone and cyclohexanone; ether based solvent such as propylene glycol monopropyl ether, propylene glycol monomethyl ether, ethylene glycol monoethyl ether, ethylene glycol monopropyl ether, ethylene glycol monobutyl ether, diethylene glycol monomethyl ether, diethyl glycol monoethyl ether, diethyl glycol monopropyl ether, diethyl glycol monobutyl ether and diethylene glycol-2-ethylhexyl ether; aromatic solvent such as benzene, toluene and xylene, and the like. These may be used alone or in combination.

Meanwhile, the optical laminate of the exemplary embodiment may have a light transmittance of 88.0% or more, or 90.0% or more, and a haze of 1.5% or less, 1.0% or less, or 0.5% or less.

Meanwhile, according to another exemplary embodiment of the invention, a display device including the optical laminate of the above-mentioned exemplary embodiment can be provided.

The display device can be used as a flat-shaped as well as a curved, bendable, flexible, rollable or foldable-shaped mobile communication terminal, a touch panel of a smartphone or a tablet PC, and cover substrate or element substrate of various displays.

An example of the display device may be a flexible light emitting element display device. In the light emitting element display device, the polymer film of the exemplary embodiment may be used as a substrate, an external protective film or a cover window. In detail, the light emitting element display device may be an organic light emitting diode (OLED) display using the polymer film according to the exemplary embodiment as a cover window. The light emitting element display device may include an equipment part known as a constituent component of a general organic light emitting diode (OLED) display, except that the polymer film is used as the cover window.

For example, in the organic light emitting diode (OLED) display, a cover window including the polymer film may be positioned on an outer portion in a direction in which light or an image is emitted, and a cathode providing electrons, an electron transport layer, an emission layer, a hole transport layer, and an anode providing holes may be sequentially formed.

Further, the organic light emitting diode (OLED) display may further include a hole injection layer (HIL) and an electron injection layer (EIL).

In order to allow the organic light emitting diode (OLED) display to serve and act as a flexible display, in addition to using the polymer film as the cover window, a material having predetermined elasticity may be used in negative and positive electrodes and each of the constituent components.

One example of the display device may be a rollable display or foldable display device including the optical laminate according to the exemplary embodiment.

The optical laminate may be used as a substrate, an external protective film, or a cover window of the rollable display device. The polymer film may have elasticity or flexibility to a degree at which the polymer film may not be broken by pressure or force applied from the outside and also can be sufficiently warped and folded.

The rollable display device may include the polymer film according to the exemplary embodiment together with a light emitting element and a module in which the light emitting elements are positioned, and the light emitting element and the module may also have elasticity or flexibility to a degree at which they are sufficiently warped and folded.

The rollable display may have various structures according to an application field, a specific shape, and the like. For example, the rollable display device may have a structure including a cover plastic window, a touch panel, a polarizing plate, a barrier film, a light emitting element (OLED element, or the like), a transparent substrate, or the like.

## ADVANTAGEOUS EFFECTS

According to the present invention, the optical laminate, which exhibits high hardness while simultaneously satisfying the physical property balance between flexibility and high hardness, in particular, hardly has a risk of damaging the film even in repetitive bending or folding operations, and thus, can be easily applied to bendable, flexible, rollable or foldable mobile devices, display devices, and the like, and the display device including the above-mentioned optical laminate, may be provided.

Since the optical laminate may have physical properties that can replace tempered glass and the like, the optical laminate may have characteristics to a degree at which it may not be broken by pressure or force applied from the outside and also can be sufficiently warped and folded. Further, the optical laminate exhibits flexibility, bending property, high hardness, scratch resistance and high transparency, and hardly has a risk of damaging the film even in repetitive, continuous bending or long-time folding state. Therefore, the optical laminate can be usefully applied to bendable, flexible, rollable or foldable mobile devices, display devices, front boards and display unit of various instrument panels, and the like.

## BRIEF DESCRIPTION OF THE DRAWINGS

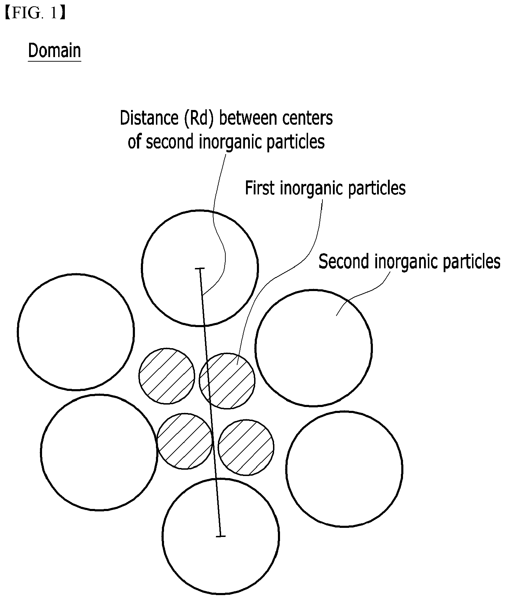

FIG. 1 schematically shows a cross section of a domain formed in a hard coating layer included in an optical laminate of one exemplary embodiment.

FIG. 2 shows the results (black line) of small-angle X-ray scattering measurement of the hard coating layer of Example 1 using two groups of inorganic particles, and the fitting results thereon (black line).

FIG. 3 shows the results (black line) of small-angle X-ray scattering measurement of the hard coating layer using one type of inorganic particles (diameter of 13 nm), and the fitting results thereon (black line).

FIG. 4 shows the results (black line) of small-angle X-ray scattering measurement of the hard coating layer using one type of inorganic particles (diameter of 25 nm), and the fitting results thereon (black line).

FIG. 5 is a diagram schematically illustrating a method for performing a bending durability test for a film according to an exemplary embodiment of the present invention.

## DETAILED DESCRIPTION OF THE EMBODIMENTS

Hereinafter, the operation and effect of the invention will be described in more detail by way of concrete examples. However, these examples are merely presented for illustrative purposes only, and the scope of the invention is not determined thereby.

### [Preparation Example: Preparation of Coating Liquid for Forming Hard Coating Layer]

The components shown in Tables 1 and 2 below were mixed to prepare a coating solution for forming a hard coating layer. (In Tables 1 to 2 below, R means the average radius of the inorganic particles calculated through the X-ray scattering experiment.)

[Table 1]

| (Unit: g) | | Preparation Example 1 | Preparation Example 2 | Preparation Example 3 | Preparation Example 4 | Preparation Example 5 | Preparation Example 6 |
|---|---|---|---|---|---|---|---|
| Monomer for forming binder | TMPTA | 10 | 10 | 10 | 10 | 10 | 10 |
| | PETA | 20 | 20 | 20 | 20 | 20 | 20 |
| | DPEPA | 20 | 20 | 20 | 20 | 20 | 20 |
| | TPGDA | 5 | 5 | 5 | 5 | 5 | 5 |
| | TA-604AU | 5 | 5 | 5 | 5 | 5 | 5 |
| Inorganic particles | $SiO_2$ (R = 25nm) | 20 | 40 | - | - | - | - |
| | $SiO_2$ (R 13nm) | 20 | - | 40 | - | - | - |
| | $TiO_2$ (R 24nm) | - | - | - | 20 | 40 | - |
| | $TiO_2$ (R 12nm) | - | - | - | 20 | - | 40 |
| | $ZrO_2$ (R = 27nm) | - | - | - | - | - | - |
| | $ZrO_2$ (R = 11nm) | - | - | - | - | - | - |
| Leveling agent | | 0.06 | 0.06 | 0.06 | 0.06 | 0.06 | 0.06 |
| Photo-initiator | | 0.72 | 0.72 | 0.72 | 0.72 | 0.72 | 0.72 |
| Organic solvent (Methyl Ethyl Ketone) | | 50 | 50 | 50 | 50 | 50 | 50 |

[Table 2]

| (Unit: g) | | Preparation Example 7 | Preparation Example 8 | Preparation Example 9 | Preparation Example 10 |
|---|---|---|---|---|---|
| Monomer for forming binder | TMPTA | 10 | 10 | 10 | 10 |
| | PETA | 20 | 20 | 20 | 10 |
| | DPEPA | 20 | 20 | 20 | 10 |
| | TPGDA | 5 | 5 | 5 | 20 |
| | TA-604AU | 5 | 5 | 5 | 50 |

(continued)

| (Unit: g) | | Preparation Example 7 | Preparation Example 8 | Preparation Example 9 | Preparation Example 10 |
|---|---|---|---|---|---|
| Inorganic particles | $SiO_2$ (R = 25nm) | - | - | - | - |
| | $SiO_2$ (R = 13nm) | - | - | - | - |
| | $TiO_2$ (R = 24nm) | - | - | - | - |
| | $TiO_2$ (R = 12nm) | - | - | - | - |
| | $ZrO_2$ (R = 27nm) | 20 | 40 | - | - |
| | $ZrO_2$ (R = 11nm) | 20 | - | 40 | - |
| Leveling agent | | 0.06 | 0.06 | 0.06 | 0.1 |
| Photo-initiator | | 0.72 | 0.72 | 0.72 | 1.21 |
| Organic solvent (Methyl Ethyl Ketone) | | 50 | 50 | 50 | 30 |

[Table 3]

| Component | Chemical name/ product name | Manufacturer | Molecular weight (g/mol) | Number of Acrylate | Acrylate equivalent weight |
|---|---|---|---|---|---|
| TMPTA | Trimethylolpropane Triacrylate | - | 338 | 3 | 113 |
| PETA | Pentaerythritol Tetraacryl | - | 352 | 4 | 88 |
| DPEPA | Dipentaerythritol Pentaacrylate | - | 525 | 5 | 105 |
| TPGDA | Tripropyleneglycol Diacrylate | - | 300 | 2 | 150 |
| TA-604AU | - | NOF Corporation | 2300 | 3 | 767 |
| Leveling agent | F477 | DIC Corporation | - | - | - |
| Photoinitiator | Irgacure 127 | Ciba Specialty Chemicals | - | - | - |

**[Example and Comparative Example: Preparation of Optical Laminate]**

**The coating composition shown in Tables below was coated onto a polyimide substrate (size: 20 cm × 30 cm, thickness: 35 $\mu$m) having an elastic modulus** value of 6.0 GPa as measured according to ASTM D882 by a bar or slot coating method, and dried at 80°C for 3 minutes under an air atmosphere. It was photocured with a metal halide lamp (light quantity: 200mJ/cm$^2$) having a wavelength of 290 to 320 nm to form an optical laminate. The photocuring was performed under a nitrogen or argon atmosphere, and the light irradiation time was 30 seconds.

**[Experimental Example: Measurement of Physical Properties of Optical Laminate]**

**Experimental Example 1: Domain Confirmation of Inorganic Particles and Measurement of Distance (Rd) Between Centers of Two Second Inorganic Particles in the Domain**

(1) Intensity vs. wavevector (q) curve secured by small-angle X-ray scattering method was fitted using a model function included in NIST SANS package. Through this method, it was confirmed whether the domain of inorganic particles was formed in Hard 1 (front side) of each of the optical laminates of Examples and Comparative Examples, and the distance (Rd) between the centers of two second inorganic particles in the domains of the inorganic particles was determined.

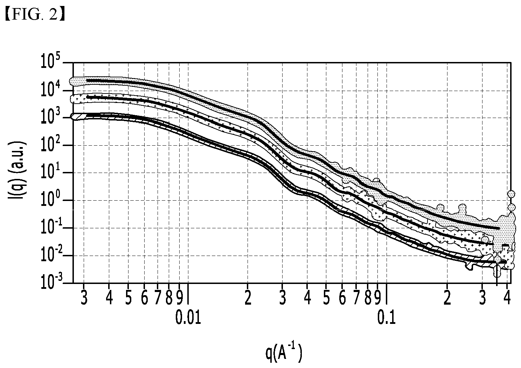

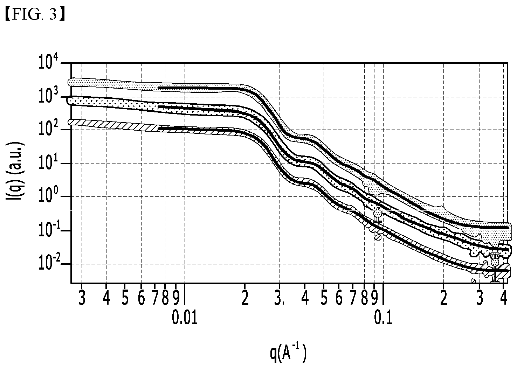

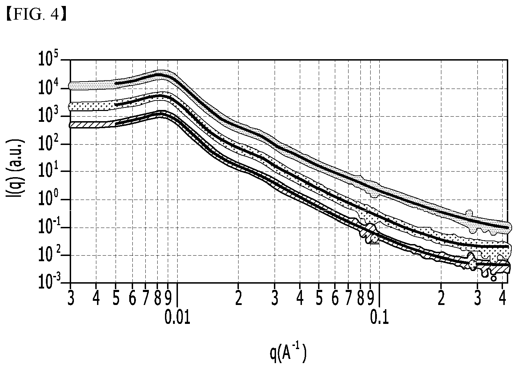

FIG. 2 shows the results (black line) of small-angle X-ray scattering measurement of the hard coating layer of Example 1 using two groups of inorganic particles, and the fitting results thereon (black line). FIGS. 3 and 4 show the results (black line) of small-angle X-ray scattering measurement of the hard coating layer using one type of inorganic particles (diameter of 13 nm and diameter of 25 nm), and the fitting results thereon (black line).

1) Apparatus

u-SAXS beam-line 9A from Pohang Accelerator Laboratory (Pohang Light Source)

<Measurement conditions>

E = 11.1 KeV, 19.9 keV,

$$\Delta E/E = 2*10^{-4}$$

q range used: 0.0024 = q($\square^{-1}$) = 0.5
Sample to detector distance (SDD; 6.5 m (11.1keV), 2.5m (19.9keV))
Pin holes collimated
2D CCD Detector (Rayonix SX165, USA)

2) Measurement method

- Film-type samples were attached to a sample holder using a transparent tape.
- The 2D image obtained in the experiment was averaged in a circle on the basis of the beam stop and converted to a 1D image (the unit is arbitrary unit, a.u. since the intensity value of the experimental data was not changed to an absolute value).
- Data measured with an SDD of 6.5 m at an energy of -11.1 KeV and two data sets per sample measured at 2.5 m SDD at an energy of 19.9 keV, were merged by NIST SANS data reduction package, and the analysis of the data was performed using the model function included in the NIST SANS package.

**Experimental Example 2: Pencil Hardness**

For the hard coating layer formed in the front face of the optical laminate of each of Examples and Comparative Examples, the maximum hardness without scratches was confirmed after moving the pencil back and forth three times at an angle of 45 degrees under a load of 750 g using a pencil hardness tester in accordance with standard JIS K5400-5-4.

**Experimental Example 3: Measurement of Dent Resistance**

In the optical laminate of each of Examples and Comparative Examples, a cohesive layer (material: OCA, thickness: 25 $\mu$m) and a polyimide film (thickness: 50 $\mu$m) were laminated on Hard 2 (back side), respectively. This laminated film was placed on the bottom so that Hard 1 (front side) faces upward.
Using a 3H hardness pencil, while starting under a load of 100 g and adding a load by 100 g, the first coating layer surface was moved once at an angle of 45 degrees, and then the maximum weight without damage such as pressing marks on all layers was confirmed. If no damage occurred by checking up to 1500 g, the test did not proceed anymore.

**Experimental Example 4: Bending Durability Test**

FIG. 5 is a diagram schematically illustrating a method for performing a bending durability test for a film according to an exemplary embodiment of the present invention.

Each optical laminate of Examples and Comparative Examples was cut, but laser-cut to a size of 80 × 140 mm so as to minimize fine cracks at an edge portion. The laser-cut film was placed on the measuring device and set so that the interval between the folded portions was 5 mm. Then, processes of folding and spreading both sides of the films at 90 degrees toward the bottom surface were repeated 10,000 times at room temperature (the speed at which the film was folded was once every 1.5 seconds).

After repeating 10,000 times, the film was peeled off, and then it was observed whether cracking of 3 mm or more in length was occurred (OK, NG). When cracks did not occur, bending was repeated 10,000 times and the occurrence of cracks were observed to determine the maximum number of repetitions that cracks did not occur. If no cracks occurred until 100,000 times of repetition, it was determined that bending durability was good.

The measurement results of the physical properties are shown in Tables 4 and 5 below.

[Table 4]

| | Hard 1(front side) | | Hard 2(back side) | | Pencil hardness (front side) | Dent Occurrence load | 100,000 times folding | Formation of domain of inorganic particles | Rd (nm) |
|---|---|---|---|---|---|---|---|---|---|
| | Composition | Thickness (um) | Composition | Thickness (um) | | | | | |
| Example 1 | Preparation Example 1 | 40 | Preparation Example 10 | 70 | 7H | 1500g | OK | ○ | About 60~75 |
| Example 2 | Preparation Example 4 | 40 | Preparation Example 10 | 70 | 7H | 1500g | OK | ○ | About 65~80 |
| Example 3 | Preparation Example 7 | 40 | Preparation Example 10 | 70 | 7H | 1500g | OK | ○ | About 80~100 |
| Example 4 | Preparation Example 1 | 30 | Preparation Example 10 | 70 | 5H | 1300g | OK | ○ | About 60~75 |
| Example 5 | Preparation Example 4 | 30 | Preparation Example 10 | 70 | 5H | 1300g | OK | ○ | About 65~80 |
| Example 6 | Preparation Example 7 | 30 | Preparation Example 10 | 70 | 5H | 1300g | OK | ○ | About 80~100 |

[Table 5]

| | Hard 1(front side) | | Hard 2(back side) | | Pencil hardness (front side) | Dent Occurrence load | 100,000 times folding | Formation of domain of inorganic particles | Rd (nm) |
|---|---|---|---|---|---|---|---|---|---|
| | Composition | Thickness (um) | Composition | Thickness (um) | | | | | |
| Comparative Example 1 | Preparation Example 2 | 40 | Preparation Example 10 | 70 | 4H | 1200g | OK | X | About 52~255 |
| Comparative Example 2 | Preparation Example 3 | 40 | Preparation Example 10 | 70 | 4H | 1200g | OK | X | About 26~36 |
| Comparative Example 3 | Preparation Example 5 | 40 | Preparation Example 10 | 70 | 4H | 1200g | OK | X | About 50~55 |
| Comparative Example 4 | Preparation Example 6 | 40 | Preparation Example 10 | 70 | 4H | 1200g | OK | X | About 24~36 |
| Comparative Example 5 | Preparation Example 8 | 40 | Preparation Example 10 | 70 | 4H | 1200g | OK | X | About 55~58 |
| Comparative Example 6 | Preparation Example 9 | 40 | Preparation Example 10 | 70 | 4H | 1200g | OK | X | About 23~30 |
| Comparative Example 7 | Preparation Example 2 | 30 | Preparation Example 10 | 70 | 3H | 1000g | OK | X | About 52~55 |
| Comparative Example 8 | Preparation Example 3 | 30 | Preparation Example 10 | 70 | 3H | 1000g | OK | X | About 26~36 |
| Comparative Example 9 | Preparation Example 5 | 30 | Preparation Example 10 | 70 | 3H | 1000g | OK | X | About 50~55 |
| Comparative Example 10 | Preparation Example 6 | 30 | Preparation Example 10 | 70 | 3H | 1000g | OK | X | About 24~36 |
| Comparative Example 11 | Preparation Example 8 | 30 | Preparation Example 10 | 70 | 3H | 1000g | OK | X | About 55~58 |

(continued)

| | Hard 1(front side) | | Hard 2(back side) | | Pencil hardness (front side) | Dent Occurrence load | 100,000 times folding | Formation of domain of inorganic particles | Rd (nm) |
|---|---|---|---|---|---|---|---|---|---|
| | Composition | Thickness (um) | Composition | Thickness (um) | | | | | |
| Comparative Example 12 | Preparation Example 9 | 30 | Preparation Example 10 | 70 | 3H | 1000g | OK | X | About 23~30 |
| Comparative Example 13 | Preparation Example 2 | 20 | Preparation Example 10 | 70 | 2H | 700g | OK | X | About 52~55 |
| Comparative Example 14 | Preparation Example 3 | 20 | Preparation Example 10 | 70 | 2H | 700g | OK | X | About 26~36 |
| Comparative Example 15 | Preparation Example 5 | 20 | Preparation Example 10 | 70 | 2H | 700g | OK | X | About 50~55 |
| Comparative Example 16 | Preparation Example 6 | 20 | Preparation Example 10 | 70 | 2H | 700g | OK | X | About 24~36 |
| Comparative Example 17 | Preparation Example 8 | 20 | Preparation Example 10 | 70 | 2H | 700g | OK | X | About 55~58 |
| Comparative Example 18 | Preparation Example 9 | 20 | Preparation Example 10 | 70 | 2H | 700g | OK | X | About 23~30 |

As shown in Tables 4 to 5 above, it was confirmed that "the domain formed by surrounding two or more first inorganic particles having an average radius of 10 to 15 nm by two or more second inorganic particles having an average radius of 20 to 35 nm" is formed in the hard coating layer formed on the front side of the optical laminate of Examples 1 to 6. As such, it was confirmed that the optical laminates of Examples had a high surface hardness of 5H or more, and had a high dent resistance together with excellent durability in a bending test.

On the contrary, it was confirmed that in the optical laminates of Comparative Examples 1 to 6 including the hard coating layer prepared using one type of inorganic particle, the domain of the inorganic particles was not formed, and relatively low surface hardness and dent resistance appeared.

In addition, it was confirmed that the optical laminate of Comparative Examples 7 to 18 including the hard coating layer in which two groups of inorganic particles were used but the domain of the inorganic particles was not formed also exhibited relatively low surface hardness and dent resistance.

## Claims

1.   An optical laminate comprising:

a substrate; and

a hard coating layer formed on at least one surface of the substrate and containing a binder resin and at least two groups of inorganic particles having different average radii,

wherein the hard coating layer includes a domain formed by surrounding two or more first group inorganic particles having an average radius of 10 to 15 nm by two or more second group inorganic particles having an average radius of 20 to 35 nm, wherein the average radii are calculated and derived by measuring the radius of individual particles identified in the electron micrographs of SEM of the hard coating layer; and

the distance (Rd), as measured according to the description, between centers of two of the second group inorganic particles located opposite to the first group inorganic particles located at the center in the domain is 60 nm to 100 nm.

2. The optical laminate of claim 1, wherein
the hard coating layer exhibits a pencil hardness of at least 5H under a load of 750g, as measured according to the description.

3. The optical laminate of claim 1, wherein
the hard coating layer has a thickness of at least 25 $\mu$m.

4. The optical laminate of claim 1, wherein
the hard coating layer has a thickness of 30 $\mu$m to 100 $\mu$m.

5. The optical laminate of claim 1, wherein
the hard coating layer includes 20 to 80 parts by weight of the total amount of the first group inorganic particles and the second group inorganic particles based on 100 weight of the binder resin.

6. The optical laminate of claim 1, wherein
the binder resin includes a polymer or copolymer of a 3- to 6-functional (meth)acrylate-based monomer.

7. The optical laminate of claim 1, wherein

the hard coating layer is formed on one surface of the substrate, and
a second hard coating layer containing a binder resin is formed on another surface of the substrate, and wherein the binder resin includes a polymer or copolymer of (meth)acrylate-based monomer.

8. The optical laminate of claim 7, wherein
the second hard coating layer has a thickness of 30 $\mu$m to 100 $\mu$m.

9. The optical laminate of claim 1, wherein
the substrate has a thickness of 20 $\mu$m to 300 $\mu$m.

10. The optical laminate of claim 1, wherein
the substrate has an elastic modulus of 3 to 20 GPa as measured according to ASTM D882.

11. The optical laminate of claim 1, wherein
the optical laminate is a cover window or an element substrate of a flexible display device.

12. A display device comprising the optical laminate of claim 1.


**Patentansprüche**

1. Optisches Laminat, umfassend:

ein Substrat; und
eine harte Beschichtungsschicht, die auf mindestens einer Oberfläche des Substrats gebildet ist und ein Bindemittelharz und mindestens zwei Gruppen von anorganischen Partikeln mit unterschiedlichen mittleren Radien enthält,
wobei die harte Beschichtungsschicht eine Domäne umfasst, die durch Umgeben von zwei oder mehr anorganischen Partikeln der ersten Gruppe mit einem mittleren Radius von 10 bis 15 nm durch zwei oder mehr anorganische Partikel der zweiten Gruppe mit einem mittleren Radius von 20 bis 35 nm gebildet ist, wobei die mittleren Radien durch Messen des Radius einzelner Partikel, die in den Elektronenmikroskopaufnahmen der SEM der harten Beschichtungsschicht identifiziert sind, berechnet und abgeleitet werden; und der Abstand (Rd), wie gemäß der Beschreibung gemessen, zwischen Zentren von zwei der anorganischen Partikel der zweiten Gruppe, die sich gegenüber den anorganischen Partikeln der ersten Gruppe befinden, die sich in der Mitte in der Domäne befinden, 60 nm bis 100 nm beträgt.

2. Optisches Laminat nach Anspruch 1, wobei die harte Beschichtungsschicht eine Bleistifthärte von mindestens 5H unter einer Last von 750 g, wie gemäß der Beschreibung gemessen, aufweist.

3. Optisches Laminat nach Anspruch 1, wobei die harte Beschichtungsschicht eine Dicke von mindestens 25 $\mu$m aufweist.

4. Optisches Laminat nach Anspruch 1, wobei die harte Beschichtungsschicht eine Dicke von 30 $\mu$m bis 100 $\mu$m aufweist.

5. Optisches Laminat nach Anspruch 1, wobei die harte Beschichtungsschicht 20 bis 80 Gewichtsteile der Gesamtmenge der anorganischen Partikel der ersten Gruppe und der anorganischen Partikel der zweiten Gruppe, bezogen auf 100 Gewichtsteile des Bindemittelharzes, enthält.

6. Optisches Laminat nach Anspruch 1, wobei das Bindemittelharz ein Polymer oder Copolymer eines 3- bis 6-funktionellen (Meth)acrylat-basierten Monomers enthält.

7. Optisches Laminat nach Anspruch 1, wobei

die harte Beschichtungsschicht auf einer Oberfläche des Substrats gebildet ist, und eine zweite harte Beschichtungsschicht, die ein Bindemittelharz enthält, auf einer anderen Oberfläche des Substrats gebildet ist, und wobei das Bindemittelharz ein Polymer oder Copolymer eines (Meth)acrylat-basierten Monomers enthält.

8. Optisches Laminat nach Anspruch 7, wobei die zweite harte Beschichtungsschicht eine Dicke von 30 $\mu$m bis 100 $\mu$m aufweist.

9. Optisches Laminat nach Anspruch 1, wobei das Substrat eine Dicke von 20 $\mu$m bis 300 $\mu$m aufweist.

10. Optisches Laminat nach Anspruch 1, wobei das Substrat einen Elastizitätsmodul von 3 bis 20 GPA, gemessen gemäß ASTM D882, aufweist.

11. Optisches Laminat nach Anspruch 1, wobei das optische Laminat ein Abdeckfenster oder ein Elementsubstrat einer flexiblen Anzeigevorrichtung ist.

12. Anzeigevorrichtung, umfassend das optische Laminat nach Anspruch 1.


**Revendications**

1. Stratifié optique comprenant :

un substrat ; et une couche de revêtement dur formée sur au moins une surface du substrat et contenant une résine liante et au moins deux groupes de particules inorganiques ayant des rayons moyens différents, dans lequel la couche de revêtement dur comprend un domaine formé en entourant deux ou plusieurs particules inorganiques du premier groupe ayant un rayon moyen de 10 à 15 nm de deux ou plusieurs particules inorganiques du deuxième groupe ayant un rayon moyen de 20 à 35 nm, dans lequel les rayons moyens sont calculés et dérivés en mesurant le rayon des particules individuelles identifiées dans les micrographies électroniques prises au microscope électronique à balayage (SEM) de la couche de revêtement dur ; et
la distance d'affichage à distance (Rd), telle que mesurée selon la description, entre les centres de deux des particules inorganiques du deuxième groupe situées à l'opposé des particules inorganiques du premier groupe situées au centre dans le domaine est de 60 nm à 100 nm.

2. Stratifié optique selon la revendication 1, dans lequel
la couche de revêtement dur présente une dureté au crayon d'au moins 5H sous une charge de 750 g, telle que mesurée selon la description.

3. Stratifié optique selon la revendication 1, dans lequel
la couche de revêtement dur a une épaisseur d'au moins 25 $\mu m$.

4. Stratifié optique selon la revendication 1, dans lequel la couche de revêtement dur a une épaisseur de 30 $\mu m$ à 100 $\mu m$.

5. Stratifié optique selon la revendication 1, dans lequel la couche de revêtement dur contient 20 à 80 parties en poids de la quantité totale de particules inorganiques du premier groupe et de particules inorganiques du deuxième groupe par rapport à 100 parties en poids de la résine liante.

6. Stratifié optique selon la revendication 1, dans lequel la résine liante contient un polymère ou un copolymère d'un monomère à base de (méth)acrylate à 3 à 6 fonctionnalités.

7. Stratifié optique selon la revendication 1, dans lequel la couche de revêtement dur est formée sur une surface du substrat, et
une deuxième couche de revêtement dur contenant une résine liante est formée sur une autre surface du substrat, et dans lequel la résine liante contient un polymère ou un copolymère de monomère à base de (méth)acrylate.

8. Stratifié optique de la revendication 7, dans lequel
la deuxième couche de revêtement dur a une épaisseur de 30 $\mu m$ à 100 $\mu m$.

9. Stratifié optique selon la revendication 1, dans lequel
le substrat a une épaisseur de 20 $\mu m$ à 300 $\mu m$.

10. Stratifié optique selon la revendication 1, dans lequel
le substrat a un module d'élasticité de 3 à 20 GPa tel que mesuré selon la norme D882 de l'ASTM.

11. Stratifié optique selon la revendication 1, dans lequel le stratifié optique est une fenêtre de couverture ou un substrat d'élément d'un dispositif d'affichage souple.

12. Dispositif d'affichage comprenant le stratifié optique selon la revendication 1.

【FIG. 1】

Domain

Distance (Rd) between centers
of second inorganic particles

First inorganic particles

Second inorganic particles

【FIG. 2】

【FIG. 3】

【FIG. 4】

【FIG. 5】

5mm

Back side(Hard 2)

Substrate

Front side (Hard 1)